# EUROPÄISCHE PATENTSCHRIFT

(11) **EP 0 455 583 B1**
(45) Veröffentlichungstag und Bekanntmachung des Hinweises auf die Patenterteilung: **01.06.1994**
(21) Anmeldenummer: 91810232.8
(22) Anmeldetag: 28.03.1991
(51) Int. Cl.: A47J 31/30, A47J 27/092, A47J 31/58

(54) **Verschlussvorrichtung für einen Druckbehälter**
Locking device for a pressure vessel
Dispositif de fermeture pour une enceinte sous pression

(30) Priorität: 30.04.1990 DE 4013817
(43) Veröffentlichungstag der Anmeldung: 06.11.1991
(73) Patentinhaber: SAMARO ENGINEERING-UND HANDELS AG, CH-8630 Rüti (CH)
(72) Erfinder: Schmed, Arthur, CH-8635 Oberdürnten (CH)
(74) Vertreter: Rottmann, Maximilian R.

(56) Entgegenhaltungen:
- CH-A- 269 135
- GB-A- 2 170 995

## Beschreibung

Die vorliegende Erfindung bezieht sich auf eine Verschlussvorrichtung für einen Druckbehälter, insbesondere für den Druckbehälter einer Dampfdruck-Kaffeemaschine, wobei der Druckbehälter einen Flansch und einen auf diesen aufsetzbaren Deckel aufweist, der durch Verdrehung um die Flansch-Mittelachse von einer geöffneten in eine geschlossene Stellung und umgekehrt bringbar ist, und mit Mitteln zum Verriegeln des Deckels in der geschlossenen Stellung, wenn im Innern des Druckbehälters ein Überdruck herrscht.

Bei Dampfdruck-Kaffemaschinen, die im Haushalt weit verbreitet sind, ist ein Druckbehälter vorhanden, der mit Wasser gefüllt wird und der eine Heizvorrichtung zum Erhitzen des eingefüllten Wassers aufweist. Üblicherweise besitzt dieser Druckbehälter einen Drehverschluss-Deckel, um das Einfüllen von Wasser zu ermöglichen und um den Druckbehälter gasdicht abschliessen zu können. Weiter ist am Druckbehälter eine Auslassleitung vorgesehen, in welche ein Überdruckventil eingefügt ist; sobald sich im Innern des Druckbehälters ein vorbestimmter Überdruck entwickelt hat, kann das erhitzte Wasser durch diese Leitung in eine Kaffeebrüh-Vorrichtung austreten.

Im Betrieb treten beträchtliche Druckwerte im Innern des Behälters auf, so dass Vorkehrungen getroffen werden müssen, dass der Deckel des Verschlussbehälters nicht gelockert oder entfernt werden kann, solange im Innern des Druckbehälters ein Überdruck herrscht. Falls nämlich der Benutzer in einer solchen Situation den Deckel zu entfernen versuchte, beispielsweise um frisches Wasser nachzufüllen, bestünde die Gefahr, dass unvermittelt Dampf oder heisses Wasser bei einer Lockerung des Dekkels austritt, mit der Konsequenz, dass die Bedienungsperson verbrüht werden könnte.

Aus der GB-PS 2 170 995 ist eine Verschlussvorrichtung der gattungsgemässen Art bekannt geworden. Diese Verschlussvorrichtung weist an der freien, unteren Kante des Schraubverschluss-Dekkels Rastnuten und benachbart zum Flansch, auf welchen der Dekkel aufgeschraubt wird, eine Kolben-Zylinder-Anordnung auf. Der Kolben dieser Anordnung steht mit dem Inneren des Druckbehälters in Verbindung und wird durch Federkraft in einer Ruhestellung gehalten, in der der Deckel verdreht werden kann. Sobald sich im Inneren des Druckbehälters ein gewisser Druck aufgebaut hat, wird der Kolben entgegen der Wirkung der Feder verschoben, so dass ein unterhalb des Deckelrandes mündender, achsial verschiebbarer Stift des Kolbens gegen den Deckel bewegt wird und in die Rastnuten des Deckels eingreift. Damit ist zwar zuverlässig verhindert, dass der Deckel des Druckbehälters abgeschraubt werden kann, wenn im Innern des Druckbehälters überdruck herrscht, doch ist die in jener GB-PS beschriebene Anordnung nicht nur aufwendig und daher teuer in der Herstellung, sondern auch störanfällig, weil insbesondere bei kalkhaltigem Wasser leicht ein Verklemmen des Betätigungskolbens im Zylinder auftreten kann.

Eine ähnliche Lösung ist im DE-GM 88 02 277 beschrieben. Die Gefahr einer Verkalkung und damit eines Klemmens des Betätigungskolbens soll dadurch vermieden werden, dass jener mit einem Faltenbalg umhüllt ist. Im übrigen ist das Funktionsprinzip der Verriegelungsvorrichtung im wesentlichen gleich. Auch diese Vorrichtung ist kompliziert im Aufbau und damit teuer in der Herstellung, wobei zudem der Faltenbalg hohen thermischen und mechanischen Belastungen ausgesetzt ist, was zu einer raschen Alterung und frühzeitigen Beschädigung desselben führen kann.

Es ist die Aufgabe der vorliegenden Erfindung, eine Verschlussvorrichtung der eingangs erwähnten Art wesentlich einfacher auszugestalten, namentlich ohne bewegte Teile am Druckbehälter selbst, die aber dennoch zuverlässig ein Entfernen des Verschlussdeckels verhindert, solange im Druckbehälter ein Überdruck herrscht.

Gemäss der Erfindung wird diese Aufgabe dadurch gelöst, dass die Mittel zum Verriegeln des Deckels zum einen ein im Deckel angeordnetes Dichtorgan aus elastisch verformbarem Material, welches seinerseits mit Mitteln zur drehfesten Verbindung mit dem Deckel versehen ist, und zum anderen einen in das Innere des Flansches hineinragenden Flanschteil umfassen, welcher mit einer umlaufenden Dichtrippe und mit umfangsseitig und oberhalb der Dichtrippe angeordneten Rastorganen versehen ist, wobei letztere bei Überdruck im Druckbehälter in entlang der inneren Umfangsfläche des Flansches angeordnete Rastvertiefungen eingreifen.

Auf diese Weise sind die Mittel zum Verriegeln des Deckels im wesentlichen durch ein im Deckel angeordnetes, elastisch verformbares Dichtungsorgan gebildet, welches zur gasdichten Abdichtung des Druckbehälters ohnehin erforderlich ist. Am Druckbehälter selbst brauchen keine beweglichen Teile angebracht zu werden; die innere Umfangsfläche des Druckbehälter-Flansches muss lediglich mit den erwähnten Rastvertiefungen versehen werden.

Bei einer bevorzugten Weiterbildung des Erfindungsgegenstandes liegt die Dichtrippe bei auf den Druckbehälter aufgesetztem Deckel bereits vor Bildung eines Überdrucks im Druckbehälter mit Vorspannung an der Innenseite des Flansches des Druckbehälters an. Dadurch kann die notwendige Druckdifferenz zwischen Innenraum des Druckbehälters und Raum zwischen Flanschteil und Innenwandung des Flansches eher hergestellt werden, wodurch das Eingreifen der Rastorgane in die Rastvertiefungen erleichtert wird.

Weiterhin kann der zwischen dem Flansch des Druckbehälters und dem Flanschteil des Dichtorgans sich erstreckende und durch die Dichtrippe vom Inneren des Druckbehälters getrennte Zwischenraum vorzugsweise mit der Atmosphäre verbunden sein. Dadurch wird der Eingriff der Rastorgane in die Rastvertiefungen aufgrund der erheblichen Druckunterschiede zwischen dem Innenraum des Druckbehälters und dem Zwischenraum zwischen Flanschteil und Innenwandung des Flansches in jedem Fall gewährleistet.

Um eine einfache Montage des Dichtorgans im Deckel bei zuverlässig wirkender Verdrehsicherung zu erreichen, kann das Dichtorgan ein in seiner Kontur im wesentlichen kreisförmiges Kopfelement umfassen, welches mit einer oder mehreren über das Kopfelement hervorstehenden Rasterhebung(en) versehen ist, die zur Herstellung einer drehfesten Verbindung zwischen Dichtorgan und Deckel in entsprechende, am Deckel ausgebildete Vertiefungen eingreifen.

Zur einfachen Herstellung einer Verbindung des Zwischenraumes zwischen Flanschteil und Innenwandung des Flansches mit der Atmosphäre kann der Durchmesser des Kopfelements geringer sein als die innere lichte Weite des Flansches des Druckbehälters.

Eine einfach aufgebaute Sicherung zur Verhinderung des Herausfallens des Dichtorgans aus dem Deckel kann dadurch erreicht werden, dass die Rasterhebungen des Kopfelements über dessen Durchmesser radial hinausragen und in eine am Deckel ausgebildete Umfangsnut eingreifen.

Zur Erzielung einer schlupffreien Verdrehsicherung entsprechen die Vertiefungen in Grösse und Anordnung den Rasterhebungen des Kopfelements des Dichtorgans.

Der Flanschteil des Dichtorgans kann im wesentlichen zylindermantelförmig ausgebildet, entlang seiner oberen Randkante an das Kopfelement des Dichtorgans einstückig angeformt und an seiner gegenüberliegenden unteren Randkante mit der umlaufenden Dichtrippe versehen sein, so dass sich eine einteilige Ausbildung von Kopfelement, Flanschteil und Dichtrippe ergibt.

Um ein leichtes Einführen des Flanschteils in die Öffnung des Flansches zu ermöglichen, kann sich das zylindermantelförmige Flanschteil zu seiner unteren Randkante hin konisch verjüngen.

Bei einer bevorzugten Ausführungsform des Erfindungsgegenstandes kann das Rastorgan aus am zylindermantelförmigen Flanschteil des Dichtorgans an seiner Aussenseite ausgebildeten Mehrzahl von über den Umfang verteilten, achsparallelen Rippen bestehen, wobei die Rastvertiefungen aus an der inneren Umfangsfläche des Flansches ausgebildeten, achsparallel verlaufenden Nuten bestehen. Dadurch ist die grösstmögliche Wirkung der durch den Überdruck erzeugten Kräfte hinsichtlich der Verdrehsicherung erreicht.

Die Massnahme, dass die Breite der Nuten geringfügig grösser ist als die Breite der Rippen, sorgt dafür, dass ein sicheres Eingreifen der Rippen als Ganzes in die zugehörigen Nuten erfolgt. Wenn ferner sowohl die Rippen als auch die Nuten gleichmässig über den Umfang des Flanschteils bzw. die innere Umfangsfläche des Flansches verteilt sind, ist gewährleistet, dass möglichst viele Rippen in eine passende Nut eingreifen können. Dieser Nutzen kann noch dadurch erhöht werden, dass die Anzahl der Nuten ein ganzzahliges Vielfaches der Anzahl der Rippen am zylindermantelförmigen Flanschteil beträgt.

Wenn am Übergang vom Flanschteil zum Kopfelement eine umlaufende Kerbe ausgebildet ist, kann das Flanschteil gegenüber dem Kopfteil flexibler gestaltet werden, was die Dichtwirkung verbessert. Eine nochmalige Verbesserung der Flexibilität kann die Massnahme bringen, dass der radial innerhalb des Flanschteils am Kopfelement ausgebildete Abschnitt eine topfförmige Gestalt aufweist, wobei der Boden des topfförmigen Abschnitts in etwa auf der Höhe der unteren Randkante verläuft.

Im folgenden wird die erfindungsgemäss Verschlussvorrichtung im Zusammenhang mit einem Druckbehälter für eine Dampfdruck-Kaffeemaschine beschrieben. Es soll aber darauf hingewiesen werden, dass sich die erfindungsgemässe Verschlussvorrichtung mit entsprechenden Anpassungen, die im Rahmen des Wissens und Könnens eines Durchschnitts-Fachmanns liegen, bei nahezu allen Arten von Druckbehältern angewendet werden kann.

Bei der nachfolgenden näheren Erläuterung der Ausführungsbeispiele wird auf die beiliegenden Zeichnungen Bezug genommen. Es zeigen:
- Fig. 1: einen achsialen Teilschnitt durch einen Druckbehälter im Bereich des Deckels, in drucklosem Zustand;
- Fig. 2: einen entsprechenden Teilschnitt wie in Fig. 1, aber in einem Zustand, in welchem im Inneren des Druckbehälters Überdruck herrscht;
- Fig. 3: eine Ansicht des Dichtorgans von oben;
- Fig. 4: einen Achsialschnitt durch das Dichtorgan, gemäss der Linie IV-IV in Fig. 3;
- Fig. 5: einen Querschnitt durch das Dichtorgan, gemäss Linie V-V in Fig. 4; und
- Fig. 6: einen Querschnitt durch ein Dichtorgan gemäss einer weiteren Ausführungsform.

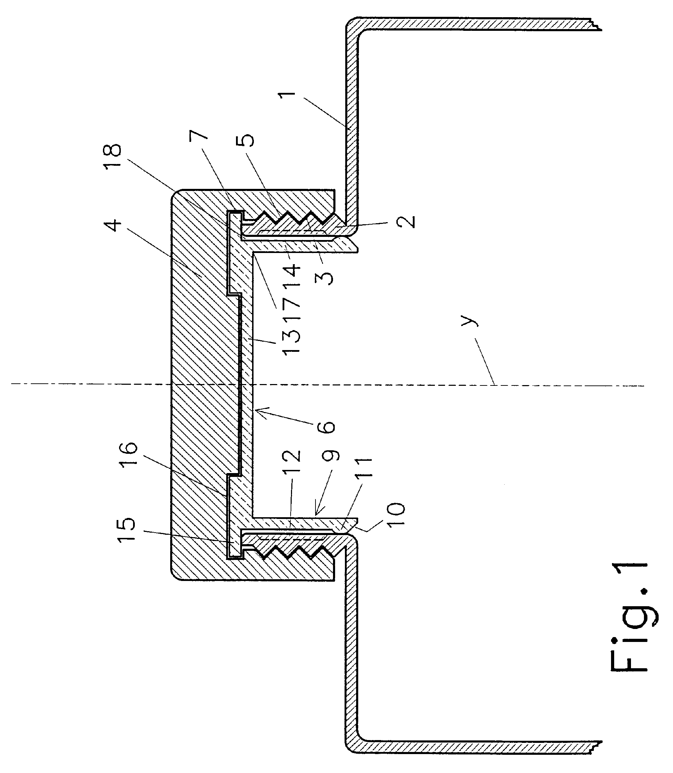

Der in Fig. 1 mit 1 bezeichnete Druckbehälter besitzt einen Flansch 2, welcher generell zylindermantelförmige Gestalt besitzt und mit einem Aussengewinde 3 versehen ist. Ein mit 4 bezeichneter Verschlussdeckel besitzt ein entsprechend ausgebildetes Innengewinde 5, um auf den Flansch 2 aufgeschraubt werden zu können. Der Deckel 4 ist mit einem generell mit 6 bezeichneten Dichtorgan versehen, welches im Prinzip lose in den Deckel 4 eingelegt ist und durch eine im Deckel 4 ausgebildete, hinterschnittene Umfangsnut 7 gehalten ist.

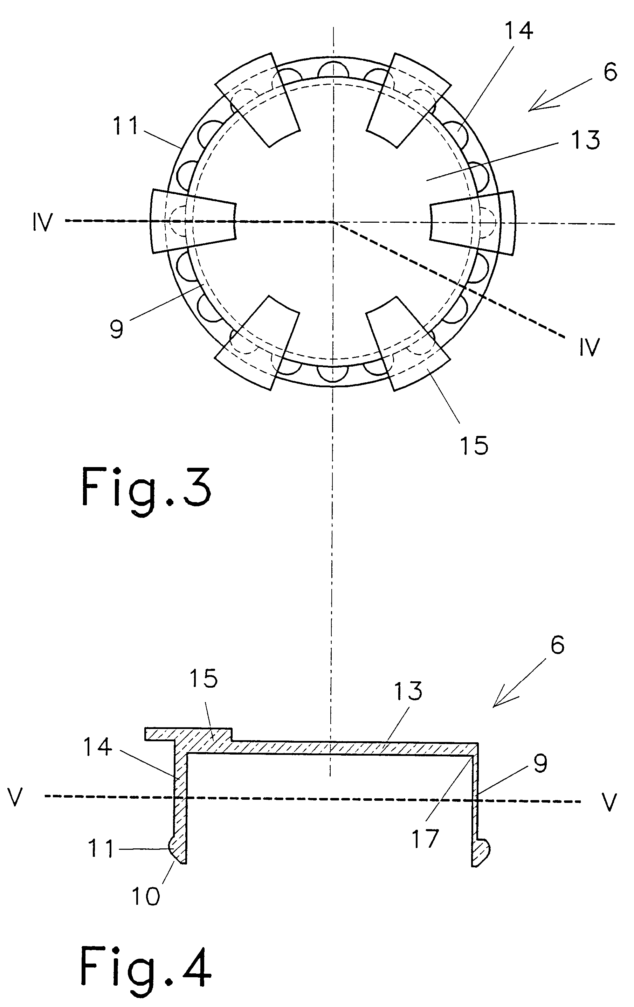

Das Dichtorgan 6 ist aus elastisch verformbarem Material, z.B. aus Kautschuk, Neopren oder einem anderen geeigneten Kunststoffmaterial hergestellt. Es besitzt einen Kopfteil, welcher im wesentlichen die Gestalt einer ebenen Platte 13 aufweist, die im vorliegenden Beispiel kreisförmig ausgebildet ist, wie dies insbesondere aus den Figuren 3 und 4 hervorgeht. An diesem Kopfteil 13 schliesst sich ein generell mit 9 bezeichneter Flanschteil an, der im wesentlichen zylindermantelförmige Gestalt besitzt. Es versteht sich, dass der Flanschteil 9 vorzugsweise einstückig mit dem Kopfteil 13 ausgebildet sein kann. Der Flanschteil 9 besitzt einen etwas geringeren Aussendurchmesser als der Innendurchmesser des Flansches 2 des Druckbehälters 1, so dass der Deckel 4 mit eingesetztem Dichtorgan 6 ohne Mühe auf den Druckbehälter 1 aufgesetzt werden kann.

Im Bereich der freien Randkante 10 des Flanschteils 9 ist eine umlaufende Dichtrippe 11 angebracht, die über die Aussenfläche des zylindermantelförmigen Flanschteils 9 hervorsteht. Die periphere Kante der Dichtrippe 11 ist dazu bestimmt, an die Innenfläche des Flansches 2 des Druckbehälters 1 anzuliegen. Vorzugsweise ist die Anordnung so getroffen, dass die Dichtrippe 11, bei auf den Druckbehälter 1 aufgesetztem Deckel 4, mit Vorspannung an der Innenseite des Flansches 2 des Druckbehälters 1 anliegt. Dies kann z.B. dadurch erreicht werden, dass die Innenfläche des Flansches 2 leicht konisch, mit von oben gegen unten abnehmendem Durchmesser, ausgebildet ist. Zur Erleichterung des Einführens des Dichtorgans 6 in den Flansch 2 und damit zur Vereinfachung des Aufsetzens des Deckels 4 auf den Druckbehälter 1 kann die in die Dichtrippe 11 übergehende Randkante 10 des zylindermantelförmigen Flanschteils 9 mit gegen das freie Ende des Flanschteils 9 hin abnehmendem Durchmesser konisch ausgebildet sein.

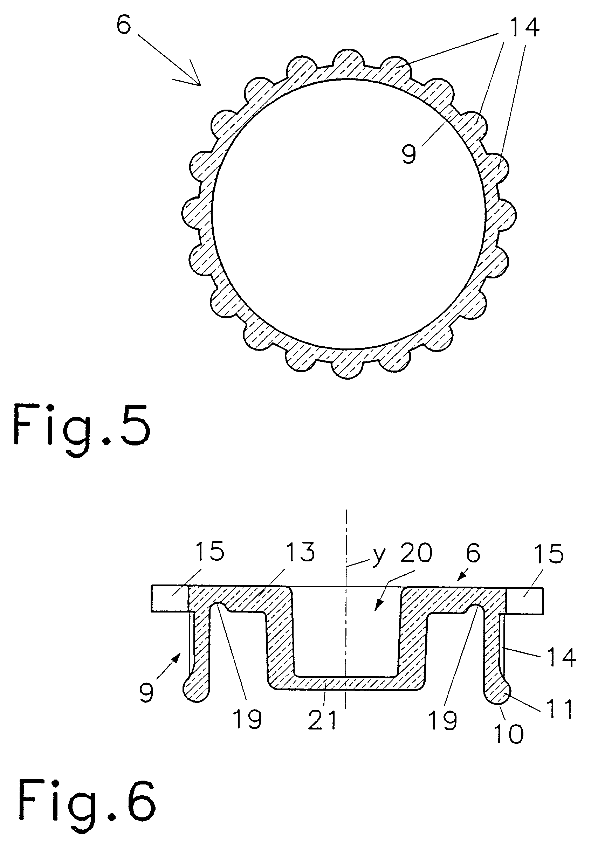

Die Innenfläche des Flansches 2 ist mit einer Anzahl von achsparallelen, über den Umfang des Flansches 2 verteilten Nuten 12 versehen. Diese erstrecken sich über einen Teil der Gesamthöhe des Flansches 2, im wesentlichen zwischen dem Übergang des Flanschteils 9 in den Kopfteil 13 des Dichtorgans 6 gegen unten bis oberhalb des Ansatzes der Dichtrippe 11. Mit diesen Nuten 12 zusammenzuarbeiten bestimmt sind über den Umfang des Flanschteils 9 aussenseitig verteilt angeordnete Rippen 14, deren Erhebung gegenüber der Aussenfläche des zylindermantelförmigen Flanschteils 9 etwas geringer ist als die Erhebung der Dichtrippe 11. Dies ist insbesondere aus den Figuren 3 und 5 zu ersehen.

Die Breite der Nuten 12 in der inneren Umfangsfläche des Druckbehälter-Flansches 2 entspricht dabei im wesentlichen der Breite der achsparallel verlaufenden Rippen 14 an der Aussenfläche des zylindermantelförmigen Flanschteils 9 des Dichtorgans 6. Es empfiehlt sich eine relativ grosse Anzahl von Rippen 14 vorzusehen, um eine Verriegelung, wie sie nachfolgend beschrieben werden wird, in praktisch jeder Drehstellung des Deckel 4 zu gewährleisten. Im vorliegenden Ausführungsbeispiel sind zwanzig Rippen vorgesehen, was im allgemeinen genügen dürfte. Die Anzahl der Nuten 12 in der inneren Umfangsfläche des Druckbehälter-Flansches 2 kann der Anzahl der Rippen 14 entsprechen; jedenfalls ist es aber vorteilhaft, wenn die Anzahl der Nuten 12 und die Anzahl der Rippen 14 in einem ganzzahligen Verhältnis zueinander stehen.

Eine andere Möglichkeit besteht auch darin, dass nur einige wenige, z.B. vier oder sechs Rippen 14 vorgesehen sind, die mit einer wesentlich grösseren Zahl von in der inneren Umfangsfläche des Flansches 2 angeordneten, achsparallelen Nuten 12 zusammenarbeiten.

Damit durch das Zusammenwirken von Rippen 14 und Nuten 12, wie es nachfolgend beschrieben werden wird, eine Verriegelung des Deckels 4 bei Überdruck im Inneren des Druckbehälters 1 erfolgen kann, muss sichergestellt werden, dass sich der Deckel 4 relativ zum Dichtorgan 6 nicht verdrehen kann. Zu diesem Zweck ist der Kopfteil 13 des Dichtorgans mit Rasterhebungen 15 versehen. Wie insbesondere aus Fig. 3 ersichtlich ist, bestehen diese Rasterhebungen 15 im vorliegenden Fall aus einstückig an den Kopfteil 13 angeformten Lappen, die einerseits über die obere Fläche des Kopfteils 13 und andererseits über dessen Umfang hervorstehen. Je nach Material des Dichtorgans 6 und je nach Grösse desselben, bzw. des Deckels 4 kann eine grössere oder kleinere Anzahl dieser Rasterhebungen 15 vorgesehen sein; im vorliegenden Beispiel sind gemäss Fig. 3 sechs Rasterhebungen 15 vorhanden.

Die Rasterhebungen 15 greifen einerseits mit ihrem äusseren Randbereich in die zuvor erwähnte Umfangsnut 7 im Deckel 4 ein, um das Dichtorgan 6 mechanisch im Deckel 4 zu verankern und gegen Herausfallen zu sichern. Andererseits ist der Deckel 4 an der Innenfläche seines Oberteils mit Vertiefungen 16 versehen, welche in Gestalt und Anzahl den Rasterhebungen 15 entsprechen. Dadurch ist eine formschlüssige, drehfeste Verbindung zwischen Dichtorgan 6 und Deckel 4 gewährleistet.

In Fig. 1 ist der Druckbehälter 1 mit aufgesetztem Deckel 4 im drucklosen Zustand dargestellt. Die Dichtrippe 11 liegt an der inneren Umfangsfläche des Druckbehälter-Flansches 2 unterhalb der Nuten 12 an und dichtet das Innere des Druckbehälters 1 gegen aussen ab. Da die restlichen Teile des Dichtorgans 6 nicht vollflächig weder am Flansch 2 noch am Deckel 4 anliegen, übernimmt allein die Dichtrippe 11 die Aufgabe der Abdichtung. Obwohl in Fig. 1 der Eindruck entstehen könnte, dass eine weitere Abdichtung zwischen Kopfteil 13, Deckel 4 und oberer Stirnkante des Flansches 2 erfolgt, ist dem nicht so, da lediglich die über die Peripherie des Kopfteils 13 hervorstehenden Teile der Rasterhebungen 15 auf der oberen Stirnkante des Flansches 2 aufliegen. Dadurch ist der Zwischenraum 18 zwischen Flanschteil 9 und Innenwandung des Behälterflansches 2 mit der Atmosphäre verbunden.

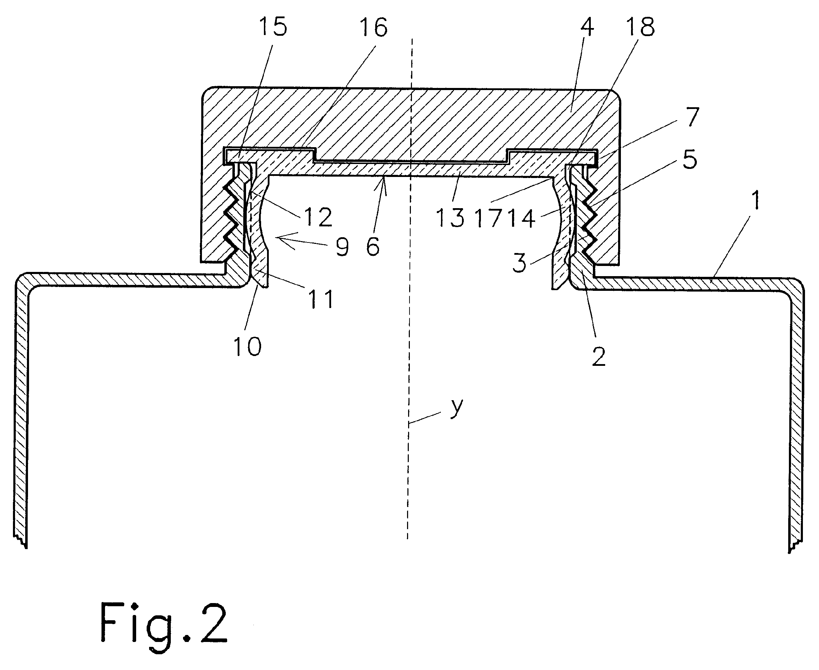

Nach Aufbau des Drucks im Inneren des Druckbehälters 1 wird der Flanschteil 9 in seinem mittleren Bereich radial gegen aussen verformt, wie dies in Fig. 2 dargestellt ist. Dieser Verformung wird kein Widerstand entgegen gesetzt, da, wie erwähnt, oberhalb der Dichtrippe 11 keine Abdichtung stattfindet, so dass die zwischen Flanschteil 9 und Flansch 2 eingeschlossene Luft entweichen kann. Durch die radiale Verformung des mittleren Bereichs des Flanschteils 9 tauchen die Rippen 14 in die Nuten 12 des Flansches 2 ein. Eine Verdrehung des Deckels wird dadurch verunmöglicht, da das Dichtorgan 6 mit seinem Kopfteil 13 gegen den Deckel gepresst wird und da insbesondere die Rasterhebungen 15 in die Vertiefungen 16 des Deckels hineingedrückt werden. Je höher die Druckdifferenz zwischen Innenseite und Aussenseite des Druckbehälters 1 ist, desto stärker wirkt diese formschlüssige Verriegelung, so dass der Deckel 4 ohne Anwendung von Gewalt und Zerstörung der Verschlussvorrichtung nicht mehr entfernt werden kann.

Wie erwähnt, besteht das Dichtorgan 6 aus elastisch verformbarem Material. Dies bedeutet, dass sich bei Abbau des Überdrucks im Innern des Druckbehälters 1 der mittlere Teil des Flanschteils 9 des Dichtorgans 6 wieder in seine ursprüngliche, in Fig. 1 gezeigte Lage zurückbewegt, mit dem Resultat, dass die formschlüssige Verbindung zwischen Rippen 14 und Nuten 12 aufgehoben ist und der Deckel 4 geöffnet werden kann.

Die einwandfreie Funktion kann dadurch unterstützt werden, dass der Durchmesser des Kopfteils 13 des Dichtorgans 6 geringer ist als die lichte Weite des Flansches 2, damit an der oberen Randkante des Flansches 2 keine Abdichtung auftritt und damit der Verformung des mittleren Bereichs des Flanschteils 9 kein nennenswerter Widerstand entgegengesetzt wird.

In der Fig. 6 ist eine weitere Ausführungsmöglichkeit des Dichtorgans 6 im Querschnitt dargestellt. Generell entspricht der Aufbau dieses Ausführungsbeispiel dem in den vorhergehenden Figuren dargestellten Dichtorgan 6. Gemäss Fig. 6 weist es jedoch am Übergang vom Flanschteil 9 zum Kopfelement 13 eine umlaufende Kerbe 19 auf. Durch diese Massnahme wird das Flanschteil 9 gegenüber dem Kopfteil 13 flexibler, was die Dichtwirkung verbessert. Ferner weist der radial innerhalb des Flanschteils 9 am Kopfelement 13 ausgebildete Abschnitt 20 eine topfförmige Gestalt auf. Der Boden 21 des topfförmigen Abschnitts 20 verläuft in etwa auf der Höhe der unteren Randkante 10. Durch diese Massnahmen wird die Flexibilität des Flanschteils 9 weiter erhöht.

Es versteht sich, dass anstelle der achsparallelen Rippen 14 an der Aussenfläche des zylindermantelförmigen Flanschteils 9 und anstelle der achsparallelen Nuten 12 an der Innenfläche des Flansches 2 anders geformte, korrespondierende Rastmittel vorgesehen sein können. Im weiteren ist es denkbar, die drehfeste Verriegelung des Dichtorgans 6 im Deckel 4 auf andere Weise zu lösen, z.B. unter Weglassen der Vertiefungen 16 und unter Ausbildung der Umfangsnut 7 im Deckel 4 mit abwechselnd unterschiedlichem Radius, wobei in die so gebildeten, radialen Ausnehmungen die Endbereiche der Rasterhebungen 15 eingreifen.

Schliesslich besteht auch die Möglichkeit einer kinematischen Umkehr: Anstatt den Flanschteil 9 mit Rippen 14 und die Innenseite des Flanschs 2 mit Nuten 12 zu versehen, kann die Aussenseite des Flanschteils 9 mit Rastvertiefungen und die Innenseite des Flanschs 2 mit Rasterhebungen versehen werden, um eine entsprechende Verriegelungswirkung bei Auftreten eines Überdrucks im Innern des Druckbehälters 1 zu erzielen.

## Patentansprüche

1. Verschlussvorrichtung für einen Druckbehälter (1), insbesondere für eine Dampfdruck-Kaffeemaschine, wobei der Druckbehälter (1) einen Flansch (2) und einen auf diesen aufsetzbaren Deckel (4) aufweist, der durch Verdrehung um die Flansch-Mittelachse (y) von einer geöffneten in eine geschlossene Stellung bringbar ist, und mit Mitteln zum Verriegeln des Deckels (4) in der geschlossenen Stellung, die dann wirksam sind, wenn im Inneren des Druckbehälters (1) ein Überdruck herrscht, dadurch gekennzeichnet, dass die Mittel zum Verriegeln des Deckels (4) zum einen ein im Deckel (4) angeordnetes Dichtorgan (6) aus elastisch verformbarem Material, welches seinerseits mit Mitteln (15) zur drehfesten Verbindung mit dem Deckel (4) versehen ist, und zum anderen einen in das Innere des Flansches (2) hineinragenden Flanschteil (9) umfassen, welcher mit einer umlaufenden Dichtrippe (11) und mit umfangsseitig und oberhalb der Dichtrippe (11) angeordneten Rastorganen (14) versehen ist, wobei letztere bei Überdruck im Druckbehälter (1) in entlang der inneren Umfangsfläche des Flansches (2) angeordnete Rastvertiefungen (12) eingreifen.

2. Verschlussvorrichtung nach Anspruch 1, dadurch gekennzeichnet, dass die Dichtrippe (11) bei auf den Druckbehälter (1) aufgesetzten Deckel (4) bereits vor Bildung eines Überdrucks im Druckbehälter (1) mit Vorspannung an der Innenseite des Flansches (2) des Druckbehälters (1) anliegt.

3. Verschlussvorrichtung nach Anspruch 1, dadurch gekennzeichnet, dass der zwischen dem Flansch (2) des Druckbehälters (1) und dem Flanschteil (9) des Dichtorgans (6) sich erstrekkende und durch die Dichtrippe (18) vom Inneren des Druckbehälters (1) getrennte Zwischenraum (18) mit der Atmosphäre verbunden bleibt.

4. Verschlussvorrichtung nach Anspruch 1, dadurch gekennzeichnet, dass das Dichtorgan (6) ein in seiner Kontur im wesentlichen kreisförmiges Kopfelement (13) umfasst, welches mit einer oder mehreren über das Kopfelement (13) hervorstehenden Rasterhebung(en) (15) versehen ist, die zur Herstellung einer drehfesten Verbindung zwischen Dichtorgan (6) und Deckel (4) in entsprechende, am Deckel (4) ausgebildete Vertiefungen (16) eingreifen.

5. Verschlussvorrichtung nach Anspruch 4, dadurch gekennzeichnet, dass der Durchmesser des Kopfelements (13) geringer ist als die innere lichte Weite des Flansches (2) des Druckbehälters (1).

6. Verschlussvorrichtung nach Anspruch 4, dadurch gekennzeichnet, dass die Rasterhebungen (15) des Kopfelements (13) über dessen Durchmesse radial hinausragen und in eine am Dekkel (4) ausgebildete Umfangsnut (7) eingreifen.

7. Verschlussvorrichtung nach Anspruch 4, dadurch gekennzeichnet, dass die Vertiefungen (16) in Grösse und Anordnung den Rasterhebungen (15) des Kopfelements (13) des Dichtorgans (6) entsprechen.

8. Verschlussvorrichtung nach Anspruch 4, dadurch gekennzeichnet, dass der Flanschteil (9) des Dichtorgans (6) im wesentlichen zylindermantelförmig ausgebildet, entlang seiner oberen Randkante (17) an das Kopfelement (13) des Dichtorgans (6) einstückig angeformt und an seiner gegenüberliegenden unteren Randkante (10) mit der umlaufenden Dichtrippe (11) versehen ist.

9. Verschlussvorrichtung nach Anspruch 8, dadurch gekennzeichnet, dass sich das zylindermantelförmige Flanschteil (9) zu seiner unteren Randkante (10) hin konisch verjüngt.

10. Verschlussvorrichtung nach einem der vorhergehenden Ansprüche, dadurch gekennzeichnet, dass das Rastorgan (14) aus am zylindermantelförmigen Flanschteil (9) des Dichtorgans (6) an seiner Aussenseite ausgebildeten Mehrzahl von über den Umfang verteilten, achsparallelen Rippen (14) besteht und dass die Rastvertiefungen aus an der inneren Umfangsfläche des Flansches (2) ausgebildeten, achsparallel verlaufenden Nuten (12) bestehen.

11. Verschlussvorrichtung nach Anspruch 10, dadurch gekennzeichnet, dass die Breite der Nuten (12) geringfügig grösser ist als die Breite der Rippen (14).

12. Verschlussvorrichtung nach Anspruch 10, dadurch gekennzeichnet, dass sowohl die Rippen (14) als auch die Nuten (12) gleichmässig über den Umfang des Flanschteils (9) bzw. die innere Umfangsfläche des Flansches (2) verteilt sind.

13. Verschlussvorrichtung nach Anspruch 12, dadurch gekennzeichnet, dass die Anzahl der Nuten (12) ein ganzzahliges Vielfaches der Anzahl der Rippen (14) am zylindermantelförmigen Flanschteil (9) beträgt.

14. Verschlussvorrichtung nach Anspruch 8, dadurch gekennzeichnet, dass am Übergang vom Flanschteil (9) zum Kopfelement (13) eine umlaufende Kerbe (19) ausgebildet ist.

15. Verschlussvorrichtung nach Anspruch 8, dadurch gekennzeichnet, dass der radial innerhalb des Flanschteils (9) am Kopfelement (13) ausgebildete Abschnitt (20) eine topfförmige Gestalt aufweist, wobei der Boden (21) des topfförmigen Abschnitts (20) in etwa auf der Höhe der unteren Randkante (10) verläuft.

## Claims

1. Closure device for a pressure container (1), in particular for a steam pressure coffee maker, the pressure container (1) comprising a flange (2) and a cap (4) able to be fitted thereon, which by rotation about the central axis (y) of the flange can be brought from an open into a closed position and with means for locking the cap (4) in the closed position, which are effective if an excess pressure prevails inside the pressure container (1), characterised in that the means for locking the cap (4) comprise on the one hand a sealing member (6) of elastically deformable material, located in the cap (4), which is in turn provided with means (15) for non-rotary connection to the cap (4), and on the other hand a flange part (9) projecting into the inside of the flange (2), which part (9) is provided with a peripheral sealing rib (11) and with locking members (14) arranged around the periphery and above the sealing rib (11), the locking members (14) engaging in locking recesses (12) disposed along the inner peripheral surface of the flange (2) at the time of excess pressure in the pressure container (1).

2. Closure device according to Claim 1, characterised in that when the cap (4) is fitted to the pressure container (1), the sealing rib (11) already bears with pretension against the inside of the flange (2) of the pressure container (1), before the formation of an excess pressure in the pressure container (1).

3. Closure device according to Claim 1, characterised in that the gap (18) extending between the flange (2) of the pressure container (1) and the flange part (9) of the sealing member (6) and separated by the sealing rib (11) from the inside of the pressure container (1) remains connected to the atmosphere.

4. Closure device according to Claim 1, characterised in that the sealing member (6) comprises a top member (13) of substantially circular contour, which is provided with one or more locking projections (15) projecting above the top member (13), which for producing a non-rotary connection between the sealing member (6) and cap (4) engage in corresponding recesses (16) formed in the cap (4).

5. Closure device according to Claim 4, characterised in that the diameter of the top member (13) is smaller than the inside width of the flange (2) of the pressure container (1).

6. Closure device according to Claim 4, characterised in that the locking projections (15) of the top member (13) project radially beyond its diameter and engage in a peripheral groove (7) formed on the cap (4).

7. Closure device according to Claim 4, characterised in that the recesses (16) correspond in size and location to the locking projections (15) of the top member (13) of the sealing member (6).

8. Closure device according to Claim 4, characterised in that the flange part (9) of the sealing member (6) is constructed to have a substantially cylindrical surface, along its upper edge (17) is formed in one piece with the top member (13) of the sealing member (6) and on its opposite lower edge (10) is provided with the peripheral sealing rib (11).

9. Closure device according to Claim 8, characterised in that the flange part (9) having a cylindrical surface tapers conically towards its lower edge (10).

10. Closure device according to one of the preceding Claims, characterised in that the locking member (14) consists of a plurality of axis parallel ribs (14) distributed over the periphery and constructed on the flange part (9) of the sealing member (6) having a cylindrical surface, on its outer side and that the locking recesses consist of grooves (12) extending axis parallel and contructed on the inner peripheral surface of the flange (2).

11. Closure device according to Claim 10, characterised in that the width of the grooves (12) is slightly greater than the width of the ribs (14).

12. Closure device according to Claim 10, characterised in that both the ribs (14) as well as the grooves (12) are distributed uniformly over the periphery of the flange part (9) or the inner peripheral surface of the flange (2).

13. Closure device according to Claim 12, characterised in that the number of grooves (12) amounts to a whole multiple of the number of ribs (14) on the flange part (9) having a cylindrical surface.

14. Closure device according to Claim 8, characterised in that a peripheral notch (19) is formed at the transition from the flange part (9) to the top member (13).

15. Closure device according to Claim 8, characterised in that the section (20) formed radially inside the flange part (9) on the top member (13) comprises a cup-shaped design, the base (21) of the cup-shaped section (20) extending approximately at the height of the lower edge (10).

## Revendications

1. Dispositif de fermeture pour un récipient à pression (1), en particulier pour un percolateur, le récipient à pression (1) présentant un col (2) et un couvercle (4) qui peut y être mis, lequel couvercle peut passer, par rotation autour de l'axe de révolution (y) du col, d'une position ouverte à une position fermée, le dispositif comprenant des moyens de verrouillage du couvercle (4) dans la position fermée agissant quand une surpression règne à l'intérieur du récipient à pression (1), caractérisé en ce que les moyens de verrouillage du couvercle (4) comprennent d'une part un élément d'étanchéité (6) en matériau élastique déformable disposé dans le couvercle (4), lequel élément est lui-même muni de moyens (15) pour être lié au couvercle (4) avec blocage en rotation, et d'autre part un élément de col (9) logé à l'intérieur du col (2), lequel élément est muni d'une nervure d'étanchéité circulaire (11) et d'éléments d'arrêt (14) disposés circonférentiellement et au-dessus de la nervure d'étanchéité (11), ces derniers venant se loger, lorsqu'il y a une surpression dans le récipient à pression (1), dans des évidements d'arrêt (12) situés sur la surface périphérique intérieure du col (2).

2. Dispositif de fermeture selon la revendication 1, caractérisé en ce que la nervure d'étanchéité (11) disposée sur le couvercle (4) disposé sur le récipient à pression (1) s'applique avec précontrainte, déjà avant formation d'une surpression dans le récipient à pression (1), sur la face intérieure du col (2) du récipient à pression (1).

3. Dispositif de fermeture selon la revendication 1, caractérisé en ce que l'interstice (18) situé entre le col (2) du récipient à pression (1) et l'élément de col (9) de l'élément d'étanchéité (6), et séparé de l'intérieur du récipient à pression (1) par la nervure d'étanchéité (11) reste relié à l'atmosphère.

4. Dispositif de fermeture selon la revendication 1, caractérisé en ce que l'élément d'étanchéité (6) comporte un élément de capuchon (13) de contour sensiblement circulaire, lequel est muni d'une ou plusieurs saillies d'arrêt (15) dépassant sur l'élément de capuchon (13), lesquelles saillies d'arrêt, afin d'établir une liaison avec blocage en rotation entre l'élément d'étanchéité (6) et le couvercle (4), viennent se loger dans des évidements correspondants (16) formés dans le couvercle (4).

5. Dispositif de fermeture selon la revendication 4, caractérisé en ce que le diamètre de l'élément de capuchon (13) est plus petit que le diamètre intérieur du sol (2) du récipient à pression (1).

6. Dispositif de fermeture selon la revendication 4, caractérisé en ce que les saillies d'arrêt (15) de l'élément de capuchon (13) dépassent radialement du diamètre de ce dernier et viennent se loger dans une rainure circulaire (7) pratiquée dans le couvercle (4).

7. Dispositif de fermeture selon la revendication 4, caractérisé en ce que la taillie et la disposition des évidements (16) correspondent à celles des saillies d'arrêt (15) de l'élément de capuchon (13) de l'élément d'étanchéité (6).

8. Dispositif de fermeture selon la revendication 4, caractérisé en ce que l'élément de col (9) de l'élément d'étanchéité (6) est sensiblement en forme de manchon cylindrique, fait corps, le long de l'arête (17) de son bord supérieur, avec l'élément de capuchon (13) de l'élément d'étanchéité (6) et est muni, sur l'arête de son bord opposé inférieur (10), de la nervure d'étanchéité circulaire (11).

9. Dispositif de fermeture selon la revendication 8, caractérisé en ce que l'élément de col en forme de manchon cylindrique (9) se rétrécit en cône à son bord inférieur (10).

10. Dispositif de fermeture selon l'une des revendications précédentes, caractérisé en ce que l'élément d'arrêt (14) est constitué de plusieurs nervures (14) formées sur la face extérieure de l'élément de col en forme de manchon cylindrique (9) de l'élément d'étanchéité (6), parallèles à l'axe, réparties sur la circonférence, et en ce que les évidements d'arrêt sont constitués de gorges (12) s'étendant parallèlement à l'axe formées sur la surface périphérique intérieure du col (2).

11. Dispositif de fermeture selon la revendication 10, caractérisé en ce que la largeur des gorges (12) est légèrement plus grande que la largeur des nervures (14).

12. Dispositif de fermeture selon la revendication 10, caractérisé en ce qu'aussi bien les nervures (14) que les gorges (12) sont réparties de façon régulière, respectivement sur la périphérie de l'élément de col (9) et sur la surface périphérique intérieure du col (2).

13. Dispositif de fermeture selon la revendication 12, caractérisé en ce que le nombre de gorges (12) est un multiple entier du nombre de nervures (14) sur l'élément de col en forme de manchon cylindrique (9).

14. Dispositif de fermeture selon la revendication 8, caractérisé en ce qu'une encoche circulaire (19) est formée au niveau du passage de l'élément de col (9) à l'élément de capuchon (13).

15. Dispositif de fermeture selon la revendication 8, caractérisé en ce que la découpe (20) formée de façon radiale à l'intérieur de l'élément de col (9) sur l'élément de capuchon (13) présente un profil en coupelle, le fond (21) de la découpe en forme de coupelle (20) étant situé à peu près à la hauteur de l'arête du bord inférieur (10).
